# EUROPÄISCHE PATENTSCHRIFT

(11) **EP 2 363 186 B1**
(45) Veröffentlichungstag und Bekanntmachung des Hinweises auf die Patenterteilung: **17.02.2016**
(21) Anmeldenummer: 11001803.3
(22) Anmeldetag: 04.03.2011
(51) Int. Cl.: B01D 29/11, E05F 3/10

(54) **Ringfilter in raumsparender Ausführung**
Ring filter in space saving design
Filtre annulaire compact

(30) Priorität: 05.03.2010 DE 102010010545
(43) Veröffentlichungstag der Anmeldung: 07.09.2011
(73) Patentinhaber: DORMA Deutschland GmbH, 58256 Ennepetal (DE)
(72) Erfinder: Wildförster, Thomas, 58332 Schwelm (DE)
(74) Vertreter: Balder IP Law, S.L.

(56) Entgegenhaltungen:
- EP-A1- 1 621 240
- EP-A2- 2 186 982
- DE-A1- 1 933 213
- US-A- 3 724 495

## Beschreibung

### Hintergrund

Die vorliegende Erfindung betrifft einen Ringfilter, der sich ringförmig um eine Mittelachse erstreckt und zur Anordnung in einer Aufnahme ausgebildet ist, mit einem Filtermaterial, das zur Filterung eines das Filtermaterial durchströmenden Mediums dient.

### Stand der Technik

Ringfilter dienen beispielsweise zur Filterung von Druckflüssigkeit in Türbetätigern. Diese weisen ein die Aufnahme repräsentierendes Gehäuse auf, in dem ein Kolben längsbeweglich geführt ist. Dabei ist zumindest eine Druckkammer gebildet, die durch den Kolben beweglich begrenzt ist. Wird die Tür betätigt, so wirkt die Bewegung des Türblattes über eine Schließerwelle mit der Längsbewegung des Kolbens zusammen. Folglich wird auch die Hydraulikflüssigkeit bewegt, die in der Druckkammer aufgenommen ist und das Medium bildet. Zur Erzeugung einer gedämpften Türbewegung wird die Hydraulikflüssigkeit über einen Strömungswiderstand geführt. Dabei ist es erforderlich, die Hydraulikflüssigkeit zu filtern. Hierzu kommen Ringfilter zum Einsatz, die beispielsweise am Ende einer Druckkammer im Gehäuse angeordnet sind. Bekannt sind Ringfilter, wie im Dokument EP 2 186 982 A2, die axial angeströmt werden, und ein Filtermaterial aufweisen, das die Hydraulikflüssigkeit filtert, indem diese radial aus dem Ringfilter abströmt. Hierzu kann beispielsweise ein Abströmkanal vorgesehen sein, der sich radial aus der Druckkammer heraus erstreckt.

Bei einer derartigen Anordnung eines Ringfilters ergibt sich der Nachteil, dass der mögliche Bewegungsraum des Kolbens in der Druckkammer begrenzt ist. Aus Platzgründen ist zu vermeiden, die Baugröße eines Türbetätigers der Größe des Ringfilters anzupassen. Folglich ist es erforderlich, einen Ringfilter zu schaffen, der einen möglichst minimalen Bauraum einnimmt. Dennoch muss eine Filterfunktion aufrechterhalten bleiben, wobei aus konstruktiver Sicht häufig ein axiales Anströmen und ein radiales Abströmen des zu filternden Mediums vorteilhaft oder sogar erforderlich ist. Die Aufnahme zur Anordnung des Ringfilters kann in der Druckkammer selbst ausgebildet sein oder die Aufnahme ist durch ein Bereich eines Gehäuses einer technischen Einrichtung gebildet. Dabei wird die Aufnahme zumeist axial mit dem zu filternden Medium angeströmt.

Es ist daher die Aufgabe der vorliegenden Erfindung, einen Ringfilter in einer raumsparenden Ausführung zu schaffen. Insbesondere ist es die Aufgabe der vorliegenden Erfindung, einen Ringfilter zu schaffen, der in einer Aufnahme anordbar ist und der durch ein zu filterndes Medium axial angeströmt wird, und wobei das gefilterte Medium radial abströmen kann.

Diese Aufgabe wird ausgehend von einem Ringfilter gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

### Offenbarung der Erfindung

Die Erfindung schließt die technische Lehre ein, dass der Ringfilter gebildet ist durch wenigstens einen ersten Ringkörper zur ruhenden Anordnung in der Aufnahme und einen zweiten Ringkörper, der in der Aufnahme bewegbar ist, wobei das Filtermaterial zwischen dem ersten Ringkörper und dem zweiten Ringkörper aufgenommen ist.

Die Erfindung geht dabei von dem Gedanken aus, den Bauraum des Ringfilters auf den erforderlichen Einbauraum des ersten Ringkörpers in ruhender Anordnung zu begrenzen. Wird der zweite Ringkörper bewegbar aufgenommen, so kann dieser relativ zum ersten Ringkörper bewegt werden, und sich beispielsweise in den Bauraum des ersten Ringkörpers hinein erstrecken. Die Anordnung des Filtermaterials zwischen dem ersten Ringkörper und dem zweiten Ringkörper bewirkt, dass ein Erstreckungsbereich eines ruhend angeordneten Filtermaterials entfällt, sodass der Ringfilter auch durch diese Maßnahme kleiner ausgeführt werden kann. Im Ergebnis entsteht eine Anordnung eines Ringfilters in raumsparender Ausführung.

Durch die Anordnung des Filtermaterials am zweiten Ringkörper wird dieses wenigstens teilweise mit dem zweiten Ringkörper mitbewegt. Dadurch ergibt sich keine starre Anordnung des zweiten Ringkörpers relativ zum ersten Ringkörper, und die Bewegung des zweiten Ringkörpers kann derart vorteilhaft vorgesehen sein, dass weitere, insbesondere bewegte Bauteile in der Einbauumgebung des Ringfilters in ihrer Anordnung und in ihrer Bewegung nicht behindert sind.

Mit Vorteil kann der zweite Ringkörper durch einen bewegbaren Körper in der Aufnahme entlang der Mittelachse bewegbar sein. Beispielsweise kann der bewegbare Körper den Kolben in einem Türbetätiger darstellen, wobei die Aufnahme zur Führung des Kolbens und zur gleichzeitigen Aufnahme des Ringfilters durch das Gehäuse des Türbetätigers gebildet ist. Ist der zweite Ringkörper auf dem Kolben aufgenommen, so führt dieser gegen den ersten Ringkörper die gleiche Bewegung aus wie der Kolben des Türbetätigers. Betrifft die Anordnung des Ringfilters die Aufnahme in anderen technischen Einrichtungen, so kann selbstverständlich auch der zweite Ringkörper ruhend angeordnet sein, wobei der erste Ringkörper an einem beweglichen Bauteil aufgenommen ist. Mit weiterem Vorteil kann sowohl der erste Ringkörper als auch der zweite Ringkörper beweglich in einer Vorrichtung aufgenommen sein, sodass beispielsweise zwei gegeneinander bewegbare Körper jeweils einen Ringkörper aufnehmen, zwischen denen sich das Filtermaterial erstreckt. Die Bewegung des oder der Körper muss nicht konzentrisch um eine Mittelachse verlaufen. Selbstverständlich können die Bewegungen zueinander auch radial oder in sonstiger Richtung verlaufen.

Vorteilhafterweise ist das Filtermaterial aus einem dauerelastischen und/ oder flexiblen Material ausgeführt, insbesondere kann das Filtermaterial aus einem Kunststoffmaterial und/oder einem Siebmaterial und/oder einem Gewebematerial und/oder einem Gewirk und/oder einem Textil ausgebildet sein. In Abhängigkeit vom Einbaufall kann der zweite Ringkörper beispielsweise an einem periodisch bewegten Körper aufgenommen sein, sodass sich die periodische Bewegung in das Filtermaterial fortsetzt. Daraus ergibt sich eine dynamische Belastung des Filtermaterials, sodass die Materialauswahl derart getroffen sein muss, dass das Filtermaterial auch nach einer großen Wiederholrate der dynamischen Bewegung keine Rissbeschädigungen jeglicher Art aufweist. Das Filtermaterial sollte mit besonderem Vorteil ausschließlich elastisch verformt werden, sodass sich ein hochelastisches Material wie beispielsweise ein Kunststoffmaterial und insbesondere ein Gewebematerial anbietet. Die Ringkörper können beispielsweise aus einem Kunststoffmaterial hergestellt und vorzugsweise spritzgegossen sein. Dabei kann das Filtermaterial durch das Material der Ringkörper eingegossen werden, beispielsweise im Einlege-Spritzgussverfahren.

Vorteilhafterweise weist das Filtermaterial einen Falzbereich auf, um eine Beweglichkeit zwischen dem ruhenden ersten Ringkörper und dem bewegbaren zweiten Ringkörper zu schaffen. Der Falzbereich kann eine oder mehrere mäanderförmige Faltungen des Filtermaterials aufweisen, sodass das Filtermaterial im Querschnitt beispielsweise einer Wellenform entspricht. Als weiteres Beispiel kann der Falzbereich durch eine Vorformung des Filtermaterials bereits vorab ausgebildet sein, sodass das Filtermaterial auch im kraftlosen Zustand bereits die mäanderförmige Wellenform aufweist. Die Wellenform kann konzentrische Materialfalze aufweisen, die sich zwischen dem ersten Ringkörper und dem zweiten Ringkörper konzentrisch mit diesen erstrecken. Dadurch entsteht eine manschettenartige Ausführung des Filtermaterials, wie diese durch Faltenmanschetten für dichtende Anordnungen zwischen zwei vorzugsweise konzentrischen Bauteilen bereits bekannt sind. Ein weiterer Vorteil wird dadurch gebildet, dass die aktive Filterfläche durch die faltenartige Ausführung vergrößert werden kann.

Mit weiterem Vorteil kann der Innendurchmesser des ersten Ringkörpers größer sein als der Außendurchmesser des zweiten Ringkörpers. Dadurch ist ein Eintauchen des zweiten Ringkörpers in den ersten Ringkörper möglich, wodurch eine besonders raumsparende Ausführung des Ringfilters entsteht. Der radiale Abstand zwischen dem ersten und dem zweiten Ringkörper kann derart bemessen sein, dass sich zwischen den Ringkörpern das Filtermaterial erstrecken kann. Damit ist der Vorteil gegeben, dass auch der bewegbare Körper wenigstens teilweise in den ruhend in der Aufnahme angeordneten ersten Ringkörper hineinbewegbar ist. Ist der bewegbare Körper als Kolben und die Aufnahme als Gehäuse zur Führung des Kolbens ausgeführt, so kann sich der Kolben innenseitig in den ersten Ringkörper hinein bewegen. Das Filtermaterial folgt dabei der Bewegung des bewegbaren Körpers, sofern der zweite Ringkörper am bewegbaren Körper angeordnet ist.

Der bewegbare Kolben wirkt zugleich derart auf das Medium, dass dieses durch das Filtermaterial strömt. Dies wird insbesondere dadurch bewirkt, dass die Druckkammer, die durch den bewegbaren Kolben beweglich begrenzt ist, durch die Bewegung des Kolbens in Richtung zum Ringfilter verkleinert wird. Im Ergebnis wird das Medium durch das Filtermaterial gedrückt. Nachdem das Medium durch das Filtermaterial gedrückt ist, kann dieses beispielsweise radial abströmen. Zur Abströmung kann der erste Ringkörper beispielsweise einen Abströmkanal aufweisen.

Der zweite Ringkörper kann unbeweglich am bewegbaren Körper angeordnet sein, wobei nach einem weiteren Ausführungsbeispiel der zweite Ringkörper auch frei beweglich in der Aufnahme geführt sein kann. Ist der Ringkörper unbeweglich am bewegbaren Körper angeordnet, so bewegt sich der zweite Ringkörper vollständig mit der Bewegung des bewegbaren Körpers mit. Ist der zweite Ringkörper alternativ frei beweglich in der Aufnahme geführt, so kann der zweite Ringköper beispielsweise nur auf einem Teil der Bewegung des bewegbaren Körpers durch den bewegbaren Körper mitbewegt werden. Ist der bewegbare Körper als Kolben ausgeführt, so kann beispielsweise der Kolben etwa nur auf einem Teilabschnitt des gesamten Bewegungsweges des Kolbens gegen den zweiten Ringkörper zur Anlage gelangen und diesen mitbewegen. Folglich muss der zweite Ringkörper nicht den vollständigen Bewegungsweg des bewegbaren Körpers ausführen. Dies ist insbesondere dann von Vorteil, wenn der Ringkörper im Endbereich eines Bewegungsweges eines bewegbaren Körpers angeordnet ist, wobei jedoch der lediglich verfügbare Bauraum zur Anordnung des Ringfilters zumindest teilweise in den Bewegungsraum des bewegbaren Körpers fällt.

Mit weitem Vorteil kann ein Federelement vorgesehen sein, das sich zwischen dem ersten Ringkörper und dem zweiten Ringkörper erstreckt. Beispielsweise können der erste Ringkörper und der zweite Ringkörper mit einem gleichen Durchmesser ausgeführt sein. Dabei ruht der erste Ringkörper in der Aufnahme, wobei der zweite Ringkörper durch den bewegbaren Körper, beispielsweise einem Kolben, mitbewegt wird. Dabei wird die Bewegung gegen die Federkraft des Federelementes ausgeführt, und wenn der bewegbare Körper den zweiten Ringkörper wieder frei gibt, so sorgt das Federelement dafür, dass der zweite Ringkörper wieder in eine Anfangsposition zurückgeführt wird. Dabei kann beispielsweise das Filtermaterial gespannt werden.

Vorzugsweise kann der Ringfilter zum Einsatz in einem Türbetätiger zur Betätigung einer Tür ausgebildet sein, insbesondere kann das das Filtermaterial durchströmende Medium die Hydraulikflüssigkeit in einem hydraulisch wirkenden Türbetätiger sein. Mit weiterem Vorteil bildet der bewegbare Körper einen Kolben, wobei vorzugsweise die Aufnahme ein Gehäuse des Türbetätigers ist, in dem der Kolben längsbeweglich ist, und wobei der Kolben vorzugsweise mit einer Schließerwelle des Türbetätigers wirkverbunden ist, die mit der Tür bewegbar ist. Dabei kann die Aufnahme eine Druckkammer bilden, wobei das Medium vom bewegbaren Körper durch das Filtermaterial hindurch strömbar ist, und wobei insbesondere zur radialen Abströmung des Mediums nach Durchströmen des Filtermaterials ein Abströmkanal in der Aufnahme vorgesehen ist.

### Bevorzugte Ausführungsbeispiele der Erfindung

Weitere, die Erfindung verbessernde Maßnahmen werden nachfolgend gemeinsam mit der Beschreibung eines bevorzugten Ausführungsbeispiels der Erfindung anhand der Figuren näher dargestellt.

Es zeigen:
- Figur 1a, 1b:: eine quergeschnittene und eine perspektivische Ansicht eines Ausführungsbeispiels eines Ringfilters in raumsparender Ausführung gemäß der vorliegenden Erfindung,
- Figur 2:: einen Querschnitt eines Ringfilters gemäß der vorliegenden Erfindung,
- Figur 3:: ein erstes Ausführungsbeispiel zum Einbau des Ringfilters in einer Aufnahme,
- Figur 4:: ein zweites Ausführungsbeispiel eines Ringfilters zum Einbau in einer Aufnahme, wobei der zweite Ringkörper mit dem bewegbaren Körper eine feste Verbindung aufweist und
- Figur 5:: ein weiteres Ausführungsbeispiel eines Ringfilters zum Einbau in einer Aufnahme, wobei der zweite Ringkörper lediglich auf einem Teilabschnitt des Bewegungsweges des bewegbaren Körpers mitbewegbar ist.

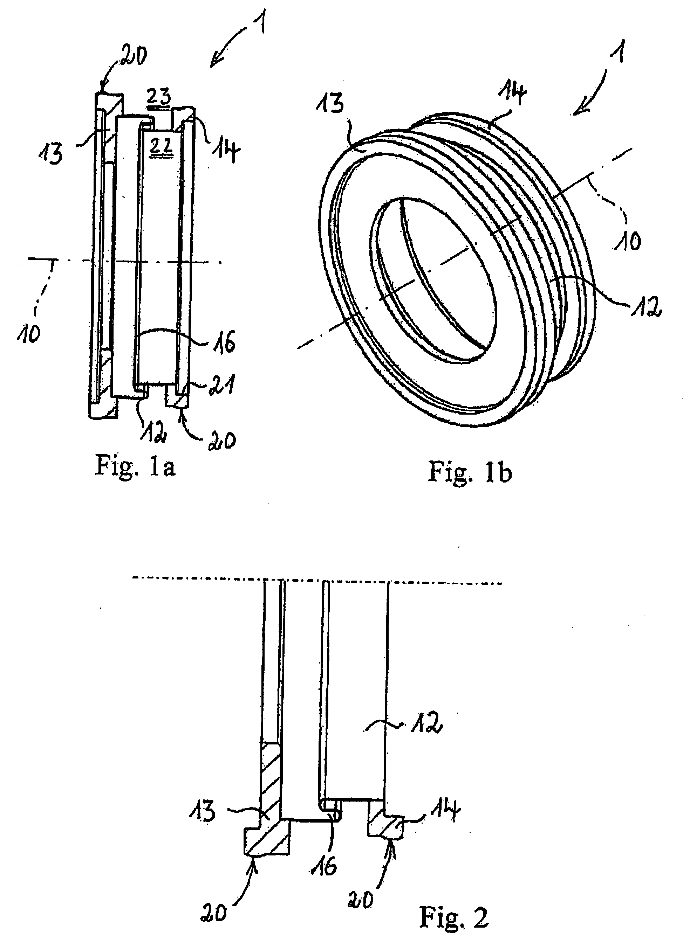

Die Figuren 1 a und 1 b zeigen ein Ausführungsbeispiel eines Ringfilters 1 gemäß der vorliegenden Erfindung. Der Ringfilter 1 erstreckt sich um eine Mittelachse 10, wobei die Grundstruktur des Ringfilters 1 durch einen ersten Ringkörper 13 und eine zweiten Ringkörper 14 gebildet ist. Zwischen den Ringkörpern 13 und 14 erstreckt sich ein Filtermaterial 12, das zur Filterung eines das Filtermaterial 12 durchströmenden Mediums dient. Erfindungsgemäß bildet der zweite Ringkörper 14 einen gegenüber dem ersten Ringkörper 13 beweglichen Teil des Ringfilters 1. Der erste Ringkörper 13 ist über das Filtermaterial 12 mit dem zweiten Ringkörper 14 verbunden. Das Filtermaterial 12 kann beispielsweise mit dem Werkstoff der Ringkörper 13 und 14 jeweils endseitig umgossen sein.

Im ausgestreckten Zustand des Filtermaterials 12 bildet dieses einen schlauchartigen Körper, wobei jedoch die Darstellung einen Falzbereich 16 im Filtermaterial 12 zeigt. Der Durchmesser des zweiten Ringkörpers 14 ist kleiner als der Durchmesser des ersten Ringkörpers 13. Durch den Falzbereich 16 ergibt sich eine Verringerung des Durchmessers des Filtermaterials 12 aus Richtung des ersten Ringkörpers 13 in Richtung zum zweiten Ringkörper 14. Das Filtermaterial 12 ist um die Mittelachse 10 rotationssymmetrisch ausgebildet, wobei der Falzbereich 16 ebenfalls vollumfänglich das Filtermaterial 12 durchsetzt.

Der erste Ringkörper 13 weist eine Dichtstruktur 20 auf, die als umlaufende Dichtschulter ausgebildet ist. Damit kann der erste Ringkörper 13 dichtend in einer bohrungsartigen Aufnahme bzw. in einem Gehäuse eingesetzt werden. Der zweite Ringkörper 14 kann ebenfalls über eine Dichtstruktur 20 oder innenseitig über einen Aufnahmevorsprung 21 an einem bewegbaren Körper aufgenommen werden. Damit bewegt sich der zweite Ringkörper 14 mit dem bewegbaren Körper mit, wobei der erste Ringkörper 13 in der Aufnahme ruhend angeordnet wird. Dient der bewegbare Körper zur beweglichen Begrenzung eines Druckbereiches, so kann ein zu filterndes Medium von einem Innenbereich 22 durch das Filtermaterial 12 in Richtung eines Außenbereiches 23 durch das Filtermaterial 12 hindurch gedrückt werden. Alternativ kann das zu filternde Medium vom Außenbereich 23 in Richtung zum Innenbereich 22 durch das Filtermaterial 12 hindurch geführt werden. Insbesondere dann liegt der Abströmbereich im Innenbereich 22.

Durch die erfindungsgemäße Ausgestaltung des Ringfilters 1 mit einem ersten und einem zweiten Ringkörper 13 und 14, die gegeneinander beweglich sind und zwischen denen sich das Filtermaterial 12 erstreckt, wird der Vorteil geschaffen, dass der Ringfilter 1 in raumsparender Anordnung in einer Aufnahme einsetzbar ist. Insbesondere dann, wenn der zweite Ringkörper 14 an einem bewegten Körper angeordnet ist, kann sich dieser in den ersten Ringkörper 13 hinein bewegen, sodass dieser Bewegungsraum zugleich genutzt wird als Aufnahmeraum des Ringfilters 1.

Figur 2 zeigt in einer vergrößerten Darstellung eine Querschnittsansicht des ersten Ringkörpers 13 und des zweiten Ringkörpers 14, zwischen denen sich das Filtermaterial 12 erstreckt. Insbesondere ist ein Falzbereich 16 erkennbar, welcher S-förmig ausgebildet ist. Der Falzbereich 16 bildet dabei eine Wellenform, wobei sich der S-förmige Falz vergrößert, wenn die Ringkörper 13 und 14 aufeinander zu bewegt werden. Die Ringkörper 13 und 14 können so weit voneinander entfernt bewegt werden, bis das Filtermaterial 12 in etwa gestreckt ist. Dabei ist darauf zu achten, dass das Filtermaterial 12 nicht unter mechanische Spannung gerät.

Außenseitig sind auf den Ringkörpern 13 und 14 Dichtstrukturen 20 ausgebildet, sodass der erste Ringkörper 13 dichtend in einer Aufnahme und der zweite Ringkörper 14 beispielsweise dichtend an einen bewegbaren Körper angeordnet werden kann.

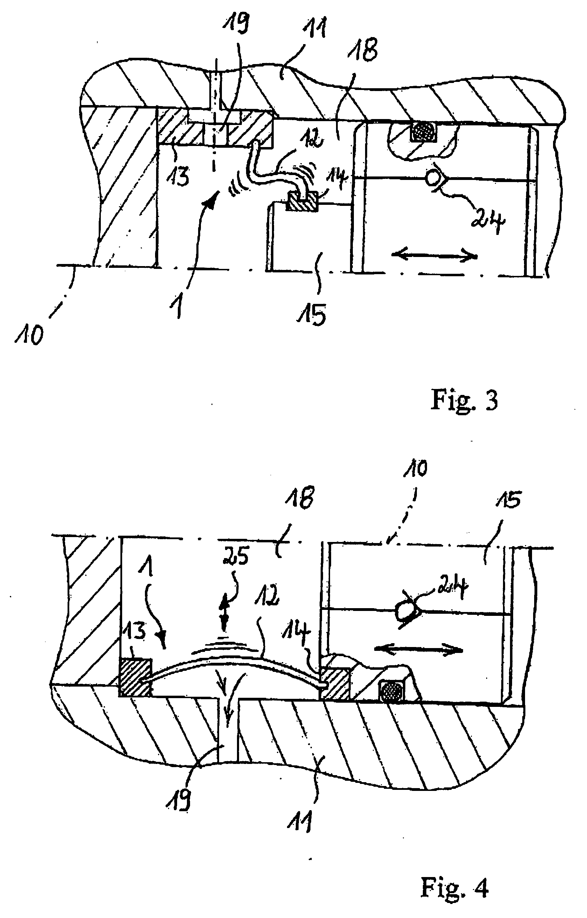

Figur 3 zeigt ein Einbaubeispiel eines Ringfilters 1 gemäß der vorliegenden Erfindung. Der Ringfilter 1 ist in einer bohrungsartigen Aufnahme 11 eingesetzt, die beispielhaft als Gehäuse 11 eines Türbetätigers zur Betätigung einer Tür ausgebildet ist. Der erste Ringkörper 13 weist einen größeren Durchmesser auf als der zweite Ringkörper 14. Zwischen den beiden Ringkörpern 13 und 14 erstreckt sich das Filtermaterial 12, wobei das Filtermaterial 12, der erste und der zweite Ringkörper 13 und 14 rotationssymmetrisch um eine Mittelachse 10 ausgebildet sind. Die Mittelachse 10 bildet zugleich die Bewegungsachse des bewegbaren Körpers 15, der einen Kolben des Türbetätigers bildet. Der Kolben 15 dient zur beweglichen Begrenzung einer Druckkammer 18. Im Kolben ist eine Ventilanordnung 24 vorgesehen, sodass bei einer ersten Bewegungsrichtung des Kolbens 15 das zu filternde Medium in die Druckkammer 18 gelangen kann, wobei das zu filternde Medium bei einer entgegengesetzten Bewegung des Kolbens 15 durch einen Abströmkanal 19 aus der Druckkammer 18 abströmen kann. Dabei kann im weitern Fluidverlauf des Abströmkanals 19 eine Drosseleinheit vorgesehen sein, um damit die Bewegung des Kolbens 15 zu dämpfen. Der Kolben 15 kann über eine Schließerwelle mit der Tür verbunden sein, um die Bewegung der Tür durch das Medium zu dämpfen. Die Darstellung zeigt einen vorderen Absatz des Kolbens 15, auf dem der zweite Ringkörper 14 fest aufgenommen ist. Der Kolben 15 kann eine Oszillationsbewegung ausführen, die durch einen Doppelpfeil angedeutet ist.

Mit der Bewegung des Kolbens 15 bewegt sich ebenfalls das Filtermaterial 12. Wird der Kolben 15 nach links bewegt, so wird das Medium, das zuvor durch die Ventilanordnung 24 in die Druckkammer 18 gelangt ist, durch das Filtermaterial 12 hindurch geführt und folglich gefiltert. Anschließend kann das Medium durch einen Abströmkanal 19, der sich in den ersten Ringkörper 13 fortsetzt, die Druckkammer 18 verlassen. Gemäß der Darstellung kann der Kolben 15 in den Montagebereich des Ringfilters 1 hinein bewegt werden. Im Ergebnis entsteht eine raumsparende Anordnung des Ringfilters 1, insbesondere in Verbindung mit der Anordnung in einer bohrungsartigen Aufnahme 11, in der ein bewegbarer Körper 15 in Gestalt eines Kolbens 15 längsbeweglich aufgenommen ist. Mit besonderem Vorteil kann der Ringfilter 1 folglich im Bewegungsraum des Kolbens 15 angeordnet sein.

Figur 4 zeigt ein weiteres Ausführungsbeispiel einer Ausführung des Ringfilters 1. Der Ringfilter 1 ist wiederum in einer bohrungsartigen Aufnahme 11, beispielsweise in Gestalt eines Gehäuses 11 eines Türbetätigers, aufgenommen. Auf gleiche Weise wie bereits in Figur 3 beschrieben, kann zu filterndes Medium durch eine Ventilanordnung 24, die im Kolben 15 eingebracht ist, in die Druckkammer 18 gelangen. Nach Durchströmen des Filtermaterials 12 kann das gefilterte Medium durch einen Abströmkanal 19 die Druckkammer 18 verlassen.

Der Ringfilter 1 besitzt einen ersten Ringkörper 13, der unbeweglich im Gehäuse 11 aufgenommen ist. Der zweite Ringkörper 14 ist fest am Kolben 15 angeordnet. Zwischen dem ersten Ringköper 13 und dem zweiten Ringkörper 14 erstreckt sich das Filtermaterial 12, welches eine bogenartige Form aufweist. Damit weist das Filtermaterial 12 eine Vorformung auf. Wird der Kolben 15 in Richtung zum ersten Ringkörper 13 bewegt, so verringert sich der Abstand zwischen dem ersten Ringkörper 13 und dem zweiten Ringköper 14. Folglich verringert sich der Krümmungsradius des bogenförmig vorgeformten Filtermaterials 12, sodass das Filtermaterial 12 eine Ausweichbewegung 25 ausführt, wenn der Kolben 15 in Richtung zur Mittelachse 10 bewegt wird. Während der Bewegung des Kolbens 15 kann das Medium durch das Filtermaterial 12 hindurch dringen, sodass dieses gefiltert durch den Abströmkanal 19 die Druckkammer 18 verlassen kann. Damit ist eine weitere Ausführungsvariante des Ringfilters 1 aufgezeigt, wobei der erste und zweite Ringfilter 13 und 14 einen etwa gleichen Durchmesser aufweisen. Das Filtermaterial 12 bildet im gestreckten Zustand eine schlauchförmige Ausbildung, wobei durch eine definierte Vorformung die radial zur Mittelachse 10 ausgerichtete Ausweichbewegung 25 ermöglicht wird, wenn der zweite Ringkörper 14 relativ zum ersten Ringkörper 13 bewegt wird.

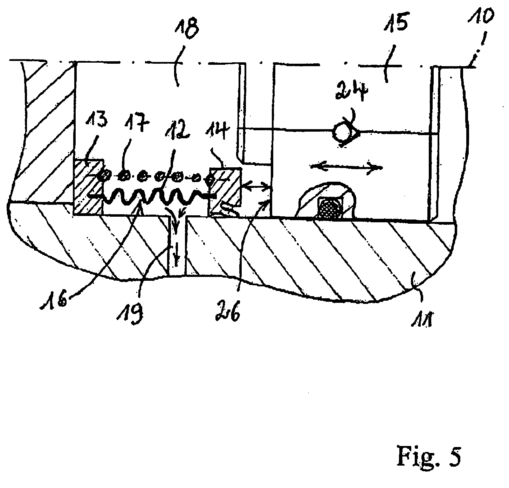

Figur 5 zeigt ein noch weiteres Ausführungsbeispiel des Ringfilters 1, welches wiederum in einer bohrungsartigen Aufnahme 11 angeordnet ist. Ein Kolben 15 ist in Richtung der Mittelachse 10 beweglich in der bohrungsartigen Aufnahme 11 aufgenommen und dient zur beweglichen Begrenzung einer in der bohrungsartigen Aufnahme 11 gebildeten Druckkammer 18. Auf gleiche Weise kann zu filterndes Medium durch eine Ventilanordnung 24, die im Kolben 15 angeordnet ist, in die Druckkammer gelangen und nach Durchströmen des Filtermaterials 12 durch einen Abströmkanal 19 die Druckkammer 18 wieder verlassen.

Der erste Ringkörper 14 ist unbeweglich in der bohrungsartigen Aufnahme 11 aufgenommen. Der zweite Ringkörper 14 ist in Richtung der Mittelachse 10 beweglich in der bohrungsartigen Aufnahme 11 angeordnet. Um einen Nebenstrom des Mediums zu vermeiden, welches ausschließlich durch das Filtermaterial 12 in Richtung zum Abströmkanal 19 gelangen soll, weist der zweite Ringkörper 14 eine Dichtlippe 27 auf, die den Bereich der Druckkammer 18 vor dem Filtermaterial 12 fluidisch vom Bereich der Druckkammer 18 nach dem Filtermaterial 12 in Richtung zum Abströmkanal 19 dichtet. Wird der Kolben 15 in Richtung zum zweiten Ringkörper 14 bewegt, so schlägt der zweite Ringkörper 14 an einen Anschlagbereich 26 am Kolben 15 an und wird mit diesem in Richtung zum ersten Ringkörper 13 mitbewegt. Das Filtermaterial 12 weist einen mäanderförmigen Querschnitt auf, der den Falzbereich 16 bildet. Zwischen dem ersten und dem zweiten Ringkörper 13 und 14 erstreckt sich ein Federelement 17, welches als Schraubendruckfeder ausgeführt ist. Damit wird eine Druckkraft zwischen den Ringkörpern 13 und 14 aufgebracht, derart, dass der zweite Ringkörper 14 ohne äußere Einwirkung durch den Kolben 15 vom ersten Ringkörper 13 weg gedrückt wird. Folglich spannt sich das Filtermaterial 12, bis eine die mäanderförmige Vorformung des Filtermaterials 12 erhaltene Spannung im Filtermaterial 12 mit der Vorspannung durch das Federelement 17 wieder im Kräftegleichgewicht ist. Bei erneutem Anstoßen den Kolbens 12 an den zweiten Ringkörper 14 über den Anschlagbereich 26 kann erneut der zweite Ringkörper 14 in Richtung zum ersten Ringkörper 13 bewegt werden. Durch die Bewegung des Kolbens 15 wird das Medium durch das Filtermaterial 12 gedrückt. Im Ergebnis wird auch durch diese Ausführungsform des Ringfilters 1 eine raumsparende Anordnung geschaffen.

Die Erfindung beschränkt sich in ihrer Ausführung nicht auf die vorstehend angegeben bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein. Insbesondere kann die Form des Filtermaterials 12 gemäß dem Ausführungsbeispiel in Figur 4 auch im Ausführungsbeispiel gemäß Figur 5 Verwendung finden. Selbstverständlich kann die Ausführung des Filtermaterials 12 mit einem mäanderförmigen Falzbereich 16 gemäß Figur 5 auch im Ausführungsbeispiel gemäß Figur 3 oder Figur 4 Verwendung finden.

### Bezugszeichenliste

- 1: Ringfilter
- 10: Mittelachse
- 11: bohrungsartige Aufnahme, Gehäuse
- 12: Filtermaterial
- 13: erster Ringkörper
- 14: zweiter Ringkörper
- 15: bewegbarer Körper, Kolben
- 16: Falzbereich
- 17: Federelement
- 18: Druckkammer
- 19: Abströmkanal
- 20: Dichtstruktur
- 21: Aufnahmevorsprung
- 22: Innenbereich
- 23: Außenbereich
- 24: Ventilanordnung
- 25: Ausweichbewegung
- 26: Anschlagbereich
- 27: Dichtlippe

## Patentansprüche

1. Ringfilter (1), der sich ringförmig um eine Mittelachse (10) erstreckt und zur Anordnung in einem Türbetätiger, mit einem Gehäuse, das eine Aufnahme (11) enthält, ausgebildet ist, mit einem Filtermaterial (12), das zur Filterung eines das Filtermaterial (12) durchströmenden Mediums dient,
**dadurch gekennzeichnet, dass** der Ringfilter (1) gebildet ist durch wenigstens:
einen ersten Ringkörper (13) zur ruhenden Anordnung in der Aufnahme (11) und
einen zweiten Ringkörper (14), der in der Aufnahme (11) bewegbar ist,
wobei das Filtermaterial (12) zwischen dem ersten Ringkörper (13) und dem zweiten Ringkörper (14) aufgenommen ist.

2. Ringfilter (1) nach Anspruch 1, **dadurch gekennzeichnet, dass** das Filtermaterial (12) durch die Anordnung am zweiten Ringkörper (14) wenigstens teilweise mitbewegt ist.

3. Ringfilter (1) nach Anspruch 1 oder 2, **dadurch gekennzeichnet, dass** der zweite Ringkörper (14) durch einen bewegbaren Körper (15) in der Aufnahme (11) entlang der Mittelachse (10) bewegbar ist.

4. Ringfilter (1) nach einem der Ansprüche 1 bis 3, **dadurch gekennzeichnet, dass** das Filtermaterial (12) aus einem dauerelastischen und/oder flexiblen Material, insbesondere aus einem Kunststoffmaterial und/oder einem Siebmaterial und/oder einem Gewebematerial und/oder einem Gewirk und/oder einem Textil ausgebildet ist.

5. Ringfilter (1) nach einem der vorgenannten Ansprüche, **dadurch gekennzeichnet, dass** das Filtermaterial (12) einen Falzbereich (16) aufweist, um eine Beweglichkeit zwischen dem ruhenden ersten Ringkörper (13) und dem bewegbaren zweiten Ringkörper (14) zu schaffen.

6. Ringfilter (1) nach einem der vorgenannten Ansprüche, **dadurch gekennzeichnet, dass** der Innendurchmesser des ersten Ringkörpers (13) größer ist als der Außendurchmesser des zweiten Ringkörpers (14).

7. Ringfilter (1) nach einem der vorgenannten Ansprüche, **dadurch gekennzeichnet, dass** der bewegbare Körper (15) wenigstens teilweise in den ruhend in der Aufnahme (11) angeordneten ersten Ringkörper (13) hinein bewegbar ist.

8. Ringfilter (1) nach einem der vorgenannten Ansprüche, **dadurch gekennzeichnet, dass** der bewegbare Körper (15) einen in der Aufnahme (11) entlang der Mittelachse (10) bewegbaren Kolben (15) bildet und vorzugsweise derart auf das Medium wirkt, dass dieses durch das Filtermaterial (12) strömt.

9. Ringfilter (1) nach einem der vorgenannten Ansprüche, **dadurch gekennzeichnet, dass** der zweite Ringkörper (14) unbeweglich am bewegbaren Körper (15) angeordnet ist.

10. Ringfilter (1) nach einem der Ansprüche 1 bis 8, **dadurch gekennzeichnet, dass** der zweite Ringkörper (14) frei beweglich in der Aufnahme (11) geführt ist.

11. Ringfilter (1) nach Anspruch 10, **dadurch gekennzeichnet, dass** der zweite Ringkörper (14) lediglich auf einem Teil der Bewegung des bewegbaren Körpers (15) durch den bewegbaren Körper (15) mitbewegbar ist.

12. Ringfilter (1) nach einem der vorgenannten Ansprüche, **dadurch gekennzeichnet, dass** ein Federelement (17) vorgesehen ist, das sich zwischen dem ersten Ringkörper (13) und dem zweiten Ringkörper (14) erstreckt.

13. Ringfilter (1) nach einem der vorgenannten Ansprüche, **dadurch gekennzeichnet, dass** der Ringfilter (1) zum Einsatz in einem Türbetätiger zur Betätigung einer Tür ausgebildet ist, insbesondere dass das das Filtermaterial (12) durchströmende Medium die Hydraulikflüssigkeit in einem hydraulisch wirkenden Türbetätiger ist.

14. Ringfilter (1) nach einem der vorgenannten Ansprüche, **dadurch gekennzeichnet, dass** der bewegbare Körper (15) einen Kolben (15) bildet und/oder dass die Aufnahme (11) ein Gehäuse (11) des Türbetätigers ist, in dem der Kolben (15) längsbeweglich ist, und wobei der Kolben (15) vorzugsweise mit einer Schließerwelle des Türbetätigers wirkverbunden ist, die mit der Tür bewegbar ist.

15. Ringfilter (1) nach einem der vorgenannten Ansprüche, **dadurch gekennzeichnet, dass** die Aufnahme (11) eine Druckkammer (18) bildet, wobei das Medium vom bewegbaren Körper (15) durch das Filtermaterial (12) hindurch strömbar ist, und wobei insbesondere zur radialen Abströmung des Mediums nach Durchströmen des Filtermaterials (12) ein Abströmkanal (19) in der Aufnahme (11) vorgesehen ist.

## Claims

1. A ringfilter (1), which extends ring-shaped about a central axis (10) and is configured for being disposed in a door operator, including a housing, which includes a reception (11), with filter material (12), which serves for filtering a medium which flows through the filter material (12),
**characterized in that** the ringfilter (1) is formed at least by the following:
a first ring body (13) for the resting disposition in the reception (11), and
a second ring body (14), which is movable in the reception (11),
wherein the filter material (12) is accommodated between the first ring body (13) and the second ring body (14).

2. The ringfilter (1) according to claim 1, **characterized in that** the filter material (12) by being disposed at the second ring body (14) is at least partially moved along.

3. The ringfilter (1) according to claim 1 or 2, **characterized in that** the second ring body (14) is movable by means of a movable body (15) in the reception (11) along the central axis (10).

4. The ringfilter (1) according to any of the claims 1 to 3, **characterized in that** the filter material (12) is configured of a permanently elastic and/or flexible material, in particular of a plastic material and/or a screening material and/or a woven material and/or a knitted fabric and/or a textile.

5. The ringfilter (1) according to any of the previous mentioned claims, **characterized in that** the filter material (12) includes a folded area (16) for creating mobility between the resting first ring body (13) and the movable second ring body (14).

6. The ringfilter (1) according to any of the previous mentioned claims, **characterized in that** the interior diameter of the first ring body (13) is larger than the exterior diameter of the second ring body (14).

7. The ringfilter (1) according to any of the previous mentioned claims, **characterized in that** the movable body (15) is at least partially movable into the first ring body (13), which is disposed in a resting manner in the reception (11).

8. The ringfilter (1) according to any of the previous mentioned claims, **characterized in that** the movable body (15) forms a movable piston (15) in the reception (11) along the central axis (10) and preferably acts upon the medium in such a way that the latter flows through the filter material (12).

9. The ringfilter (1) according to any of the previous mentioned claims, **characterized in that** the second ring body (14) is disposed to be immobile at the movable body (15).

10. The ringfilter (1) according to any of the claims 1 to 8, **characterized in that** the second ring body (14) is guided to be freely movable in the reception (11).

11. The ringflter (1) according to claim 10, **characterized in that** the second ring body (14) can be moved along just over a portion of the movement of the movable body (15) by means of the movable body (15).

12. The ringfilter (1) according to any of the previous mentioned claims, **characterized in that** a spring element (17) is provided, which extends between the first ring body (13) and the second ring body (14).

13. The ringfilter (1) according to any of the previous mentioned claims, **characterized in that** the ringfilter (1) is configured for use in a door operator for actuating a door, in particular **in that** the medium flowing through the filter material (12) consists of the hydraulic fluid in a hydraulically operating door operator.

14. The ringfilter (1) according to any of the previous mentioned claims, **characterized in that** the movable body (15) forms a piston (15) and/or **in that** the reception (11) consists of a housing (11) of the door operator, in which the piston (15) is longitudinally movable, and wherein the piston (15) is preferably operatively connected to a closer shaft of the door operator, which shaft is movable with the door.

15. The ringfilter (1) according to any of the previous mentioned claims, **characterized in that** the reception (11) forms a pressure compartment (18), wherein the medium can flow from the movable body (15) through the filter material (12), and wherein in particular a flow-off channel (19) is provided in the reception (11) for the medium to radially flow-off, after having flown through the filter material (12).

## Revendications

1. Filtre annulaire (1), qui s'étend de façon annulaire autour d'un axe central (10) et est aménagé pour être agencé dans un actionneur de porte, avec un boîtier lequel comporte une réception (11), avec un matériau filtrant (12) servant au filtrage d'un médium passant à travers le matériau filtrant (12),
**caractérisé en ce que** le filtre annulaire (1) est aménagé au moins par:
un premier corps annulaire (13) pour l'agencement au repos dans la réception (11), et
un deuxième corps annulaire (14), lequel est amovible dans la réception (11),
le matériau filtrant (12) étant accommodé entre le premier corps annulaire (13) et le deuxième corps annulaire (14).

2. Filtre annulaire (1) selon la revendication 1, **caractérisé en ce que** le matériau filtrant (12) est au moins partiellement déplacé par l'intermédiaire de l'agencement au deuxième corps annulaire (14).

3. Filtre annulaire (1) selon la revendication 1 ou 2, **caractérisé en ce que** le deuxième corps annulaire (14) est amovible dans la réception (11) le long de l'axe central (10) par l'intermédiaire d'un corps (15) amovible.

4. Filtre annulaire (1) selon l'une des revendications 1 à 3, **caractérisé en ce que** le matériau filtrant (12) est aménagé d'une matière élastique en permanence et/ou flexible, tout particulièrement de matière plastique et/ou de matériau de tamisage et/ou de matière tissée et/ou de tissu tricoté et/ou de textile.

5. Filtre annulaire (1) selon l'une des revendications mentionnées ci-avant, **caractérisé en ce que** le matériau filtrant (12) présente une région de pli (16) pour créer une mobilité entre le premier corps annulaire (13) au repos et le deuxième corps annulaire (14) mobile.

6. Filtre annulaire (1) selon l'une des revendications mentionnées ci-avant, **caractérisé en ce que** le diamètre intérieur du premier corps annulaire (13) est plus grand que le diamètre extérieur du deuxième corps annulaire (14).

7. Filtre annulaire (1) selon l'une des revendications mentionnées ci-avant, **caractérisé en ce que** le corps amovible (15) est au moins partiellement amovible dans le premier corps annulaire (13) qui est aménagé au repos dans la réception (11).

8. Filtre annulaire (1) selon l'une des revendications mentionnées ci-avant, **caractérisé en ce que** le corps amovible (15) forme un piston (15) amovible dans la réception (11) le long de l'axe central (10) et agit de préférence de telle façon sur le medium que ce dernier s'écoule à travers le matériau filtrant (12).

9. Filtre annulaire (1) selon l'une des revendications mentionnées ci-avant, **caractérisé en ce que** le deuxième corps annulaire (14) est agencé sur le corps amovible (15).

10. Filtre annulaire (1) selon l'une des revendications 1 à 8, **caractérisé en ce que** le deuxième corps annulaire (14) est guidé de façon librement amovible dans la réception (11).

11. Filtre annulaire (1) selon les revendications 10, **caractérisé en ce que** le deuxième corps annulaire (14) est seulement amovible sur une partie du mouvement du corps amovible (15) par l'intermédiaire du corps amovible (15).

12. Filtre annulaire (1) selon l'une des revendications mentionnées ci-avant, **caractérisé en ce qu**'un élément à ressort (17) est prévu, lequel s'étend entre le premier corps annulaire (13) et le deuxième corps annulaire (14).

13. Filtre annulaire (1) selon l'une des revendications mentionnées ci-avant, **caractérisé en ce que** le filtre annulaire (1) est aménagé pour être inséré dans un actionneur de porte pour actionner une porte, tout particulièrement **en ce que** le médium s'écoulant à travers le matériau filtrant (12) consiste en fluide hydraulique dans un actionneur de porte fonctionnant hydrauliquement.

14. Filtre annulaire (1) selon l'une des revendications mentionnées ci-avant, **caractérisé en ce que** le corps amovible (15) forme un piston (15) et/ou la réception (11) consiste en un boîtier (11) de l'actionneur de porte, dans lequel le piston (15) est longitudinalement amovible, et le piston (15) étant connecté opérationnellement de préférence à un arbre de fermeture de l'actionneur de porte, lequel arbre est amovible avec la porte.

15. Filtre annulaire (1) selon l'une des revendications mentionnées ci-avant, **caractérisé en ce que** la réception (11) forme un compartiment de pression (18), le médium pouvant s'écouler depuis le corps amovible (15) à travers le matériau filtrant (12) et un canal d'écoulement (19) étant prévu dans la réception (11) tout particulièrement pour l'écoulement radial du médium après avoir passé à travers le matériau filtrant (12).
